# EUROPEAN PATENT SPECIFICATION

(11) **EP 2 055 517 B1**
(45) Date of publication and mention of the grant of the patent: **03.04.2013**
(21) Application number: 08380309.8
(22) Date of filing: 29.10.2008
(51) Int. Cl.: B60J 5/04

(54) **Door for automotive vehicles**
Tür für Kraftfahrzeuge
Porte pour véhicule automobiles

(30) Priority: 29.10.2007 ES 200702201 U; 23.05.2008 ES 200801093 U
(43) Date of publication of application: 06.05.2009
(73) Proprietor: Seat, S.A., 08760 Martorell, Barcelona (ES)
(72) Inventor: Coletii Gali, Joan, 08760 Martorell Barcelona (ES); Renato Ortiz, Juan, 08760 Martorell Barcelona (ES); Dieguez Palmerito, Maribel, 08760 Martorell Barcelona (ES)
(74) Representative: Carvajal y Urquijo, Isabel

(56) References cited:
- DE-A1- 2 703 224
- DE-A1- 19 821 076
- DE-A1- 19 957 986
- DE-A1-102005 061 562

## Description

### Field of the Invention

The present invention relates to a door for automotive vehicles, including a framework, defining an upper window casing, and an outer door panel, defining the visible surface thereof.

The door of the invention is made up of several independent components which are coupled and joined to one another, generally by means of welding, and which allow manufacturing doors of the same position for vehicles of different models, using certain identical components, which will result in a reduction in the manufacturing costs.

### Background of the Invention

The manufacture of mobile elements of automobiles, in this case of the doors, involves a great challenge and complexity for vehicle manufacturers since the great variety of models is accompanied by a large investment in medium-sized and large moulds for manufacturing countless different outer panels and frameworks.

Traditional doors for automotive vehicles, such as the one shown in DE10 2005 061 562 A1, are made up of a structure, corresponding with the complete contour of the door and defining a lower body and an upper window casing. On this structure there is coupled an outer panel, in coincidence with the lower body of the structure, and a window frame, in coincidence with the mentioned upper casing. Different types of inner reinforcements can be fixed on the lower body, such as an inner belt reinforcement, a protection bar and a strut channel.

The document DE 198 21 076 A1 describes a door for automotive vehicles which is made up of a structure that comprises a continuous annular frame along the edge region of the door, defining a lower door frame and an upper window frame. The lower door frame surrounds and joins a lower door framework. Nonetheless the upper window frame remains free of other structural elements, such as an upper window frame framework.

In the case of doors for automobiles the problem is furthermore that each new model requires making new structures and inner reinforcements, when the doors are to be differentiated, which means a large investment.

There are currently different types of door manufacturing processes on the market, but which do not vary in the concept, i.e., press forming in several phases of the mentioned components and of the elements or reinforcements, and finally welding of these components elements and elements, either by laser or by point welding.

With the makeup described, the doors of different derived vehicle models must be designed from different elements and components, which means an increase in manufacturing costs and furthermore requires a greater volume of components and elements in the warehouse, both for manufacturing and for repairing doors.

### Description of the Invention

The object of the present invention is to eliminate the problem set forth by means of a makeup of the doors which allows using common components for doors of different vehicle models, provided that the doors have an identical position, i.e., they correspond to the same side and situation of the vehicle.

According to a first feature of the invention the doors are made up of a lower door framework, on which the outer door panel is fixed, of an upper window frame framework, which is fixed to the lower door framework, and of a door casing surrounding the lower door framework and the upper window frame framework and joined thereto.

In the door of the invention the lower door framework does not correspond with the complete contour of the door, but rather with the lower part thereof against which the outer door panel will be placed and on which it will be fixed. The lower door framework, according to the invention, no longer defines an upper window casing.

In addition the door of the invention, unlike traditional doors, includes a door casing surrounding the lower door framework and the upper window frame framework, once they are joined. This door casing has a ribbed profile which on the concave side embraces and is joined to the free sides of the upper window frame framework, and is furthermore supported and joined on the contour of the lower door framework. On the convex side this profile defines, along the entire length thereof, the support means for supporting the door on the gasket of the vehicle frame for said door.

The described makeup allows constructing doors for different vehicle models in which the only different components will be the upper window frame framework and the door casing, whereas the lower door framework and the outer panel will coincide, provided that they are doors corresponding to an identical position, i.e., to the same side of the vehicle and to the same front or rear situation therein.

The essential part of the described door is the door casing surrounding the entire perimeter defined by the lower door framework and the upper window frame framework. This door casing is essentially involved in the stability of the doors, since it will be the one in contact with the rubber profiles of the vehicle door frame.

The described makeup of the doors will allow manufacturing the lower door frameworks for different models with one and the same die, smaller than that used in the manufacture of the structures of current doors,.

In traditional doors, since the structure of the door corresponds to the entire contour thereof, as many moulds as there are door models will be necessary for the manufacture, for the purpose of manufacturing all the necessary complete structures. According to the invention, the only different components for doors of different models are the upper window frame framework and the door casing, which is a part relatively simple and inexpensive to construct. As many of these adaptable casings would be constructed as there are different door models, only the profile bending process varying, taking into account that the lower part of the casing, corresponding to the part which is adapted to the lower door framework would be identical in all the models.

Another object of the invention is to be able to pass from a conventional manufacturing system, based on the use of large and medium-sized moulds for press forming the different door components, to a door manufacturing system based on components with smaller dimensions, which can be obtained with smaller press forming efforts in some cases and from simple profiles in others, which can be obtained by means of standard machines, for example lamination rollers or profiling machines.

Profiles are simple elements, which require smaller investments for their manufacture than press formed parts and which are subsequently cut and bent according to needs. If the number of parts forming the door of the invention can be greater than that of a traditional door, high savings are nevertheless achieved in their manufacture, especially when there can be quite a few different door models.

With the door of the invention it can be achieved that two or more different models have the greatest number of identical independent elements in common, but which in turn have the necessary minimum tightness and rigidity.

According to the invention, the lower door framework is made up of a door framing, which is obtained by means of press forming and defines the contour of said framework, and of four perimetral reinforcements, a lower reinforcement, a front reinforcement, a rear reinforcement and an upper reinforcement. The lower, front and rear reinforcements are arranged and fixed between the outer door panel and the framing, in a position adjacent to the corresponding edges. For its part the upper reinforcement is fixed to the outer door panel, in a position adjacent to its upper edge. The inner belt reinforcement is internally fixed to the frame, in a position adjacent to its upper edge.

According to the invention, the upper window frame framework is subdivided into a frame reinforcement, defined by a C-shaped contour coinciding with the upper and lateral sides of said framework, and by a lower frame reinforcement profile, which is fixed to the inner belt reinforcement of the framing. The frame reinforcement is joined to the lower frame reinforcement profile through the door casing.

The upper and lower perimetral reinforcements of the lower door framework are made up of sheet profiles, whereas the front and rear perimetral reinforcements of the same framework are made up of press formed plates. This makeup reduces the manufacturing costs, on one hand because part of the perimetral reinforcements are obtained from sheet profiles and on the other because the rest of the reinforcements can be obtained by means of press forming moulds with a more reduced cost, because of their smaller dimensions.

The door casing and the frame reinforcement are made up of extruded profiles, the manufacture of which has a reduced cost.

The door casing is joined by welding to the frame reinforcement, to the structure of the lower frame reinforcement profile and to the door framing, all the door components thus forming a solid assembly.

With the makeup described the maximum differentiation of doors can be achieved with the minimum investment in resources and all of this as a result of the fact that a maximum number of common or derived parts can be achieved, with alternative less expensive technologies than the press forming of traditional doors,.

The door of the invention allows its modularity in the Z axis and in the X and Y axes.

### Brief Description of the Drawings

The attached drawings show a non-limiting embodiment corresponding to a front automobile door, made up according to the invention, and in which:
Figure 1 schematically shows the different makeup between traditional doors and the door of the invention.
Figure 2 is an exploded perspective view of the door of the invention.
Figure 3 schematically shows the obtaining of doors of different models using a common lower door framework and different door casings.
Figure 4 shows a side elevational view of a rear door, made up according to the invention and assembled on a vehicle.
Figure 5 is a partial vertical section of the door of the invention, through the window frame, taken according to section line V-V of Figure 4.
Figure 6 is a partial cross section of the door, taken according to section line VI-VI of Figure 4.
Figure 7 is a partial vertical section of the door, taken according to section line VII-VII of Figure 4.
Figure 8 is a partial cross section of the door, taken according to section line VIII-VIII of Figure 4.
Figure 9 shows a front elevational view of different superimposed door casings, intended for different door models.
Figure 10 depicts a side elevational view of a door made up according to the invention, together with the exploded view of the different components forming it according to an embodiment variant.
Figure 11 is an inner elevational view of the framing forming part of the lower frame of the door of Figure 10.
Figure 12 is a side elevational view of the frame reinforcement forming part of the upper window frame framework of the door in Figure 10.
Figure 13 is an elevational view of the lower window frame reinforcement profile.
Figure 14 is a front elevational view of the framing of the door of Figure 10 with the upper window frame framework.
Figure 15 is a side elevational view of the inner belt reinforcement, which can be fixed to the door framing.
Figure 16 is a side elevational view of the protection bar, which can be fixed to the door framing.
Figures 17, 18, 19 and 20 show a side elevational view of, respectively, the upper, lower, rear and front reinforcements of the lower door framework.
Figure 21 is a schematic vertical section of the door of the invention, taken according to section line XII-XII of Figure 10.
Figures 22, 23 and 24 correspond respectively to details A, B and C of Figure 21.
Figure 25 is a cross section of the door of the invention, taken according to section line XVI-XVI of Figure 10.

### Detailed Description of an Embodiment

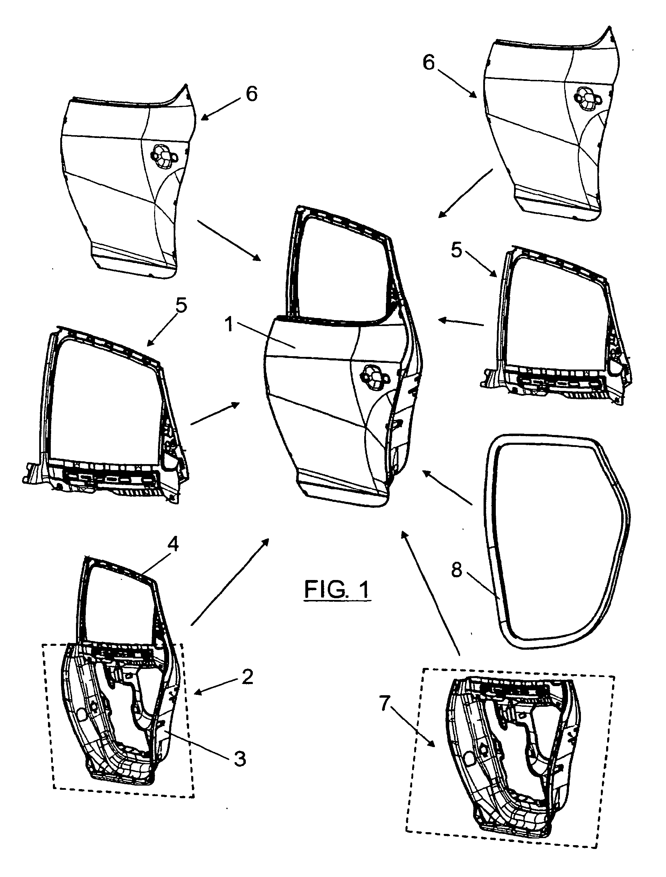

Figure 1 shows a perspective view of a door, specifically a rear left door 1 of a vehicle which, according to the traditional manufacturing processes, would be made up, as indicated on the left side, of a complete door structure 2, which would correspond to the entire contour of the door and would define a lower body 3 and an upper window casing 4, of an upper window frame framework 5, which would be coupled and fixed to the structure 2, in coincidence with the casing 3, and of an outer panel 6 which would be placed against and externally fixed in the lower body 3 of the structure 2, to make up the visible surface.

To the right of the door 1 the components thereof according to the invention are indicated, which components would consist of a lower door framework 7, corresponding only to the lower door body 3, of an upper window frame framework 5, coinciding with the framework 5 of traditional doors, of an outer door panel 6, coinciding with the panel 6 of traditional doors, and of a door casing 8 which will surround the lower door framework 7 and the upper window frame framework 5.

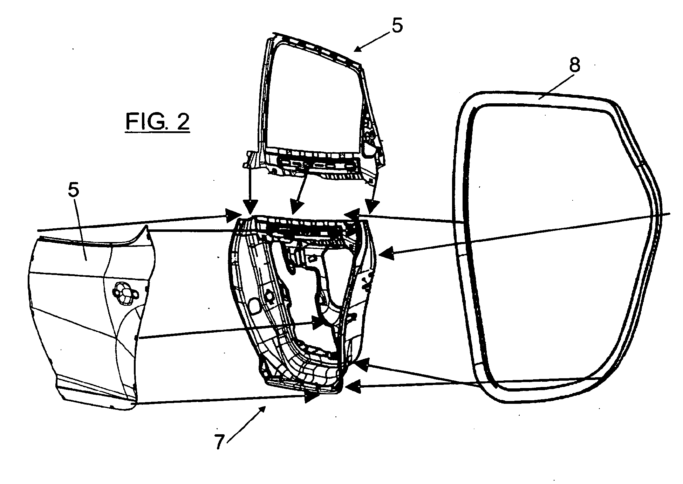

The assembly of the door of the invention, as is observed in Figure 2, would be by means of joining the upper window frame framework 5 to the lower door framework 7. The door casing 8 would be arranged on these two frameworks, in the contour thereof, whereas the outer door panel 5 would be fixed on the outer part of the lower door framework 7, a door such as that shown in a perspective view in the central part of Figure 1 thus being assembled. Figure 2 indicates by means of arrows the position in which the different components are assembled until their mutual support for their subsequent joining by welding.

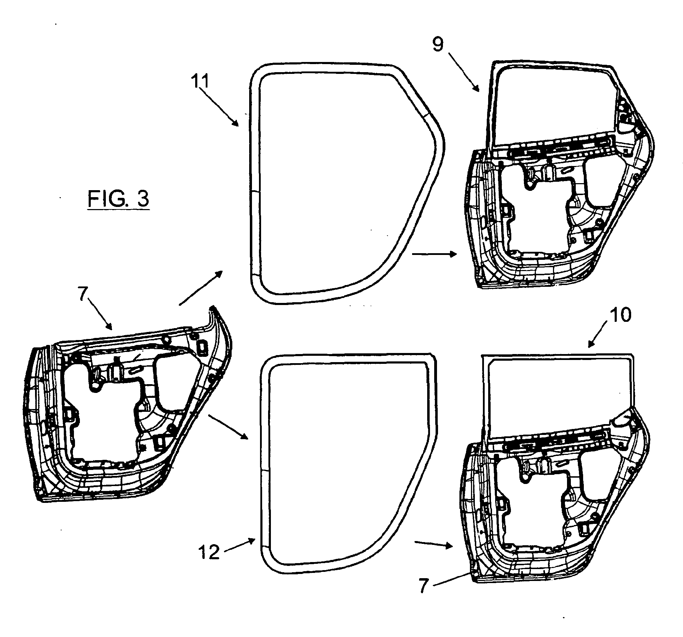

Figure 3 shows how doors of a different model can be obtained, referenced with numbers 9 and 10, from one and the same lower door framework 7 and casings 11 and 12 with a different contour. To complete the door, upper window frame frameworks 5, which are also different, not shown, and identical outer door panels 6, also not shown, will be used. In other words, to manufacture the door 9 and 10 of a different model, provided that they correspond to doors of the same position, it will only be necessary to use different door casings 11 and 12 and also upper frame frameworks 5 which are also different, but with the lower door frameworks 7 and the outer panels 6 being identical.

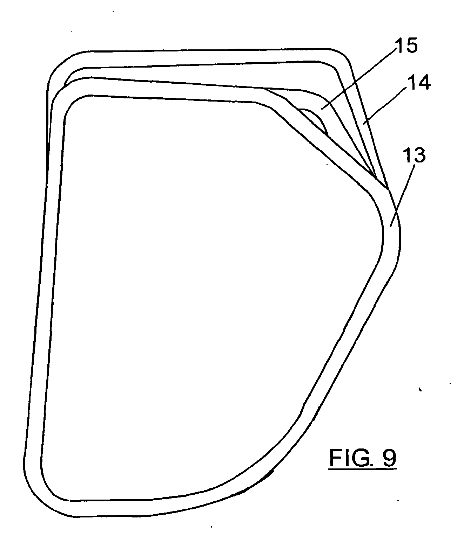

Figure 9 shows the possibility of manufacturing doors of different models, using different door casings 13, 14 and 15, varying only the profile bending process, in which only the shape of the upper part varies, the shape of the lower part which will surround the lower door framework 7 remaining constant.

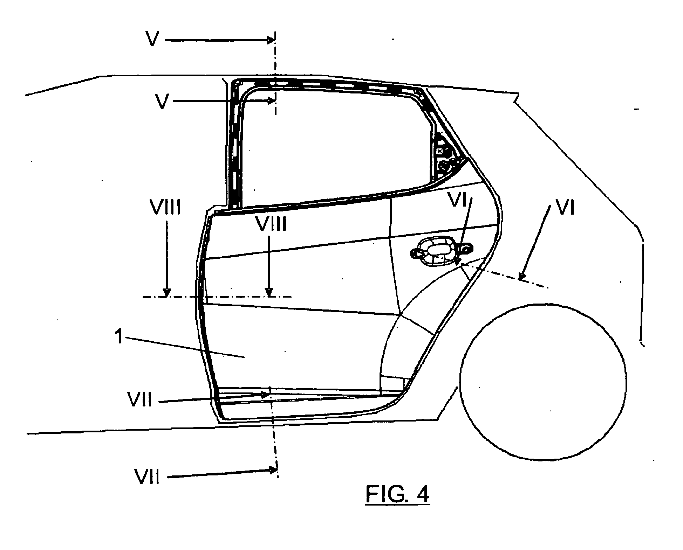

Figure 4 shows a front elevational view of a rear left door, manufactured according to the invention and assembled on a vehicle.

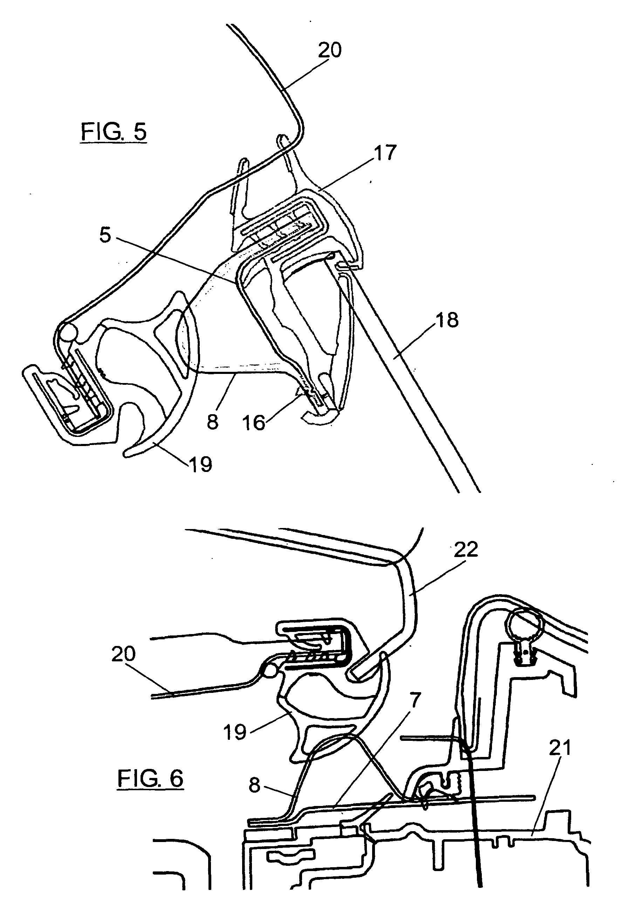

Figures 5 to 8 show the profile of the door casing 8 and its coupling and joining with the lower door framework 7 and the upper window frame framework 5.

As can be seen in the indicated figures, the door casing 8 has a ribbed profile which on the concave side embraces, as shown in Figure 5, the free sides of the upper window frame framework 5, both components having overlapping longitudinal edges, with support and joining points 16. Between these overlapping edges there is assembled a rubber profile 17 serving as a gasket means for the window glass 18.

The ribbed profile making up the door casing 8 is supported at its convex surface on the rubber profile 19 making up the gasket of the vehicle frame 20 for the door.

Figures 6 to 8 show how the ribbed profile of the door casing 8 is supported on the contour of the lower frame 7, through end portions of its walls, with which the joining is carried out by means of welding.

Figure 6 shows a section at the height of the lock 21, it being possible to see how the rubber profile 19 is inserted into the vehicle frame 20 and into the inner plastic lining 22 thereof. The convex surface of the door casing 8 is supported on this rubber profile 19.

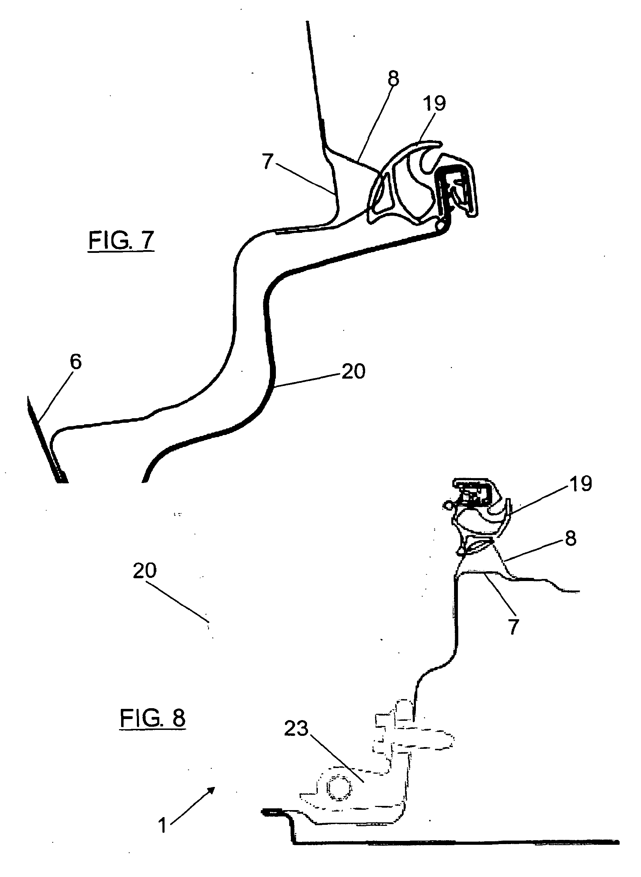

Figure 7 shows a section view of the running board area of the car, showing the arrangement of the rubber profile 19 inserted into the vehicle door frame 20 and how the tightness of the door in its closed position is achieved as a result of the door casing 8 which is supported at its convex surface on the gasket 15, deforming it. Figure 7 partially shows the outer door panel 6.

Finally, Figure 8 shows the section at the height of the hinge 23 of the door 1, it being possible to see, as in previous cases, the rubber profile 19 assembled on the door frame 20 and on which the door casing 8 fixed to the lower door framework 7 is supported.

The door manufacturing process, according to the invention, would be the following:

The press die moulds the lower door framework 7 according to the contour shown in Figure 2, a frame which will be unique for all types of doors, regardless of the vehicle model, provided that the door corresponds to an identical position, as has been previously indicated, i.e., the side of the vehicle to which it belongs does not vary and also taking into account that it is a front or rear door. Then, the upper window frame framework 5, which will be specific for each door model, is moulded by means of a second die, being welded to the lower door framework 7, as is indicated by means of arrows in Figure 2. Then, and by profiling, the different types of door casings 8, specific for each model, would be manufactured and then it would be coupled and welded onto the assembly made up of the lower door framework 7 and the upper window frame framework 5. Finally, the outer door panel 5 is shaped by means of another die, which panels are also common for all the doors of the different models, thus having doors applicable to different vehicles models by simply varying the upper window frame framework 5 and the door casing 8.

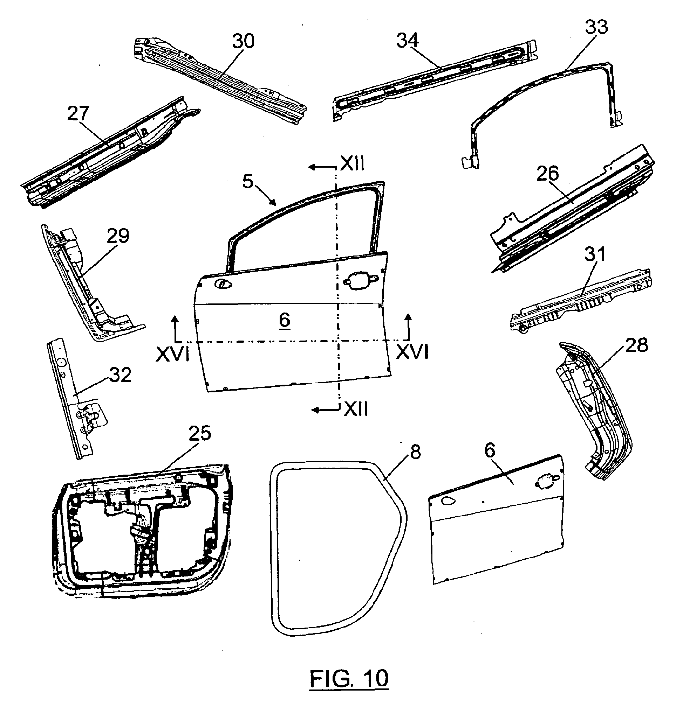

The door of Figure 10 includes a lower door framework, which is concealed by the outer door panel 6, and an upper window frame framework 5, both frames being joined by means of a perimetral casing which is concealed and is shown in the same Figure 1 as a component of the door with reference 8.

The lower door framework 7, Figure 1, which is behind the outer door panel 6, is made up in the door of Figure 10 of a door framing 25, which will define the contour of said framework, and by four perimetral reinforcements, a lower reinforcement 26, an upper reinforcement 27, a front reinforcement 28 and a rear reinforcement 29. In the door framing 25 there is furthermore assembled, in an oblique position, the protection bar 30, the belt reinforcement 31 and the strut channel 32.

For its part, the upper window frame framework 5 is made up of a frame reinforcement 33 and of a lower reinforcement profile 34.

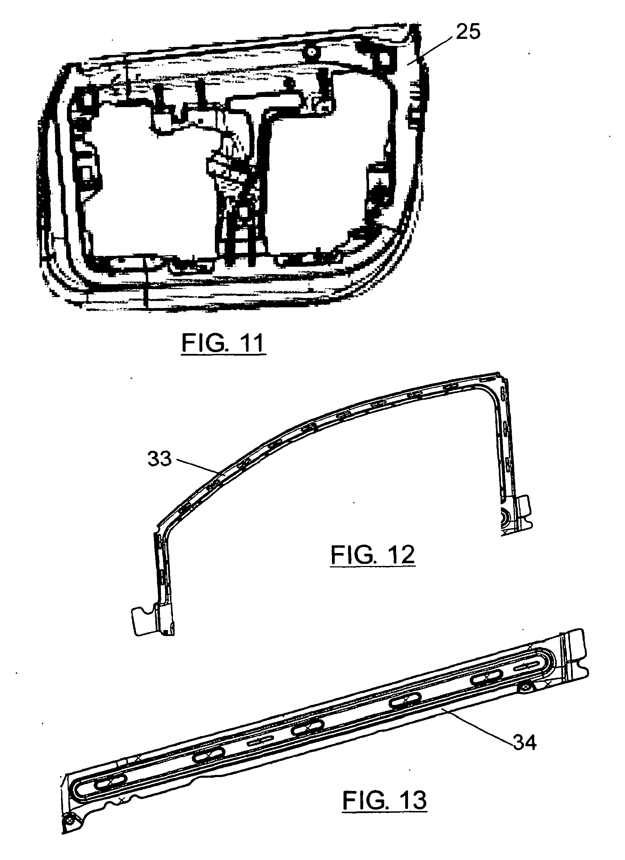

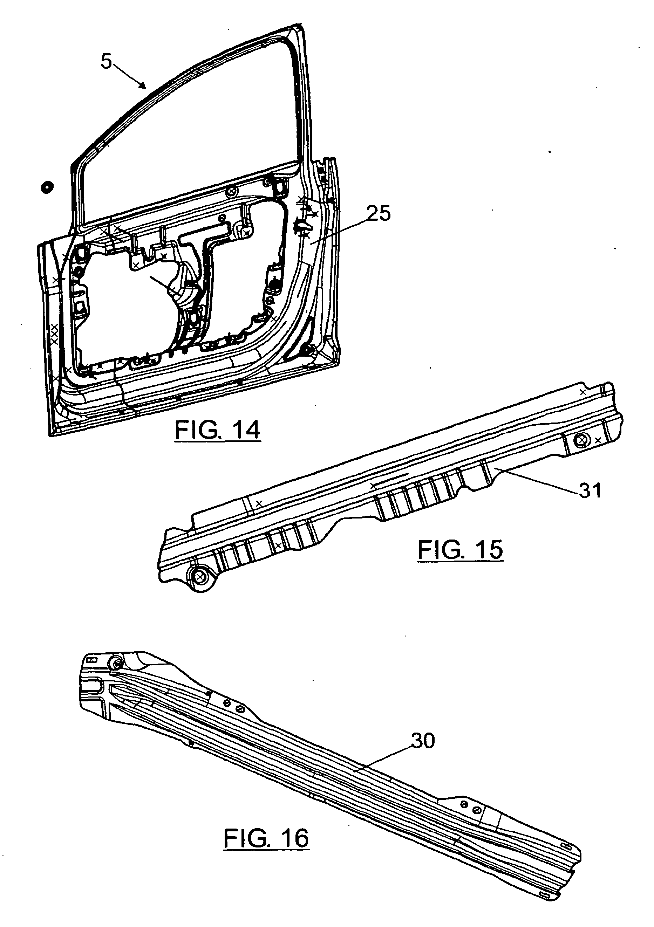

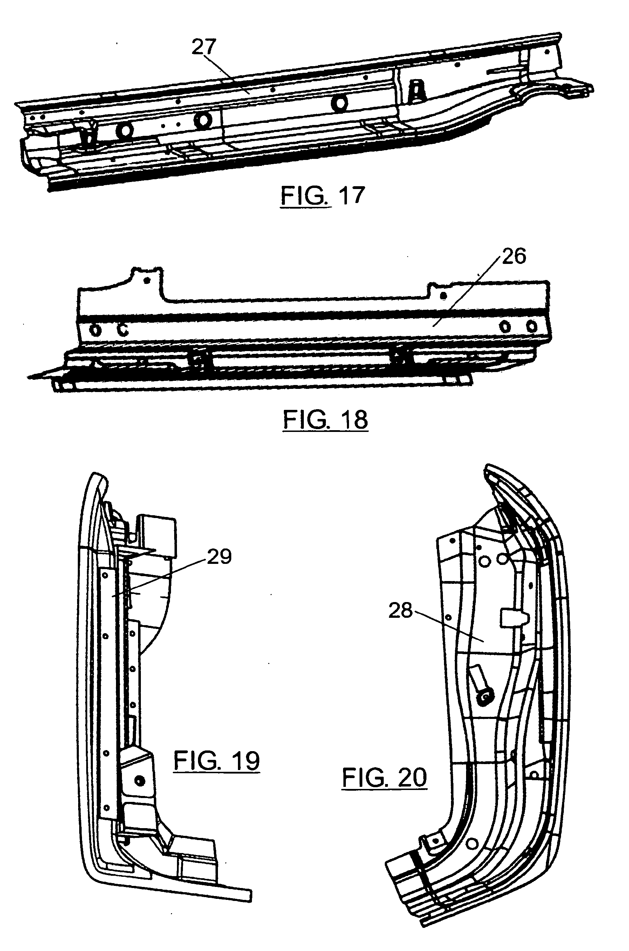

The configuration of these components can be seen with greater detail in Figures 11 to 20, of which figure 14 is an inner elevational view of the framing 25 shown in Figure 11, with the upper window frame framework 5.

The door framing 25 shown in Figure 11 will be obtained by press forming, but by means of moulds that are quite smaller than those necessary to obtain the complete lower door framework of traditional doors.

In the door described, the contour of the door framework is managed to be segmented into four perimetral reinforcements, referenced with numbers 26, 27, 28 and 29. The lower perimetral reinforcement 26 and upper perimetral reinforcement 27 are obtained from profiles, whereas the front perimetral reinforcement 28 and rear perimetral reinforcement 29 are obtained by means of press forming, based on simple moulds with reduced dimensions. With the assembly of the mentioned door framing 25 and the mentioned reinforcements, a lightened lower door framework is obtained.

The perimetral profile 8 and the lower frame reinforcement profile 34 are obtained by extrusion.

With the makeup described, the lower door framework 7 is created and formed from the door framing 25, the lower perimetral reinforcement 26, upper perimetral reinforcement 27, front perimetral reinforcement 28 and rear perimetral reinforcement 29, the protection bar 30, the inner belt reinforcement 31, the strut channel 32, thus forming the assembly of the lower door framework 7. The door is completed with the upper window frame framework 5, made up of the frame reinforcement 33 and of the lower reinforcement profile 34, the two frames being joined by the perimetral casing 8. The outer panel 6 is clamped on the lower door framework made up in the described manner.

Figures 12 to 16 show the relative position between the different door components and the fixing system therebetween.

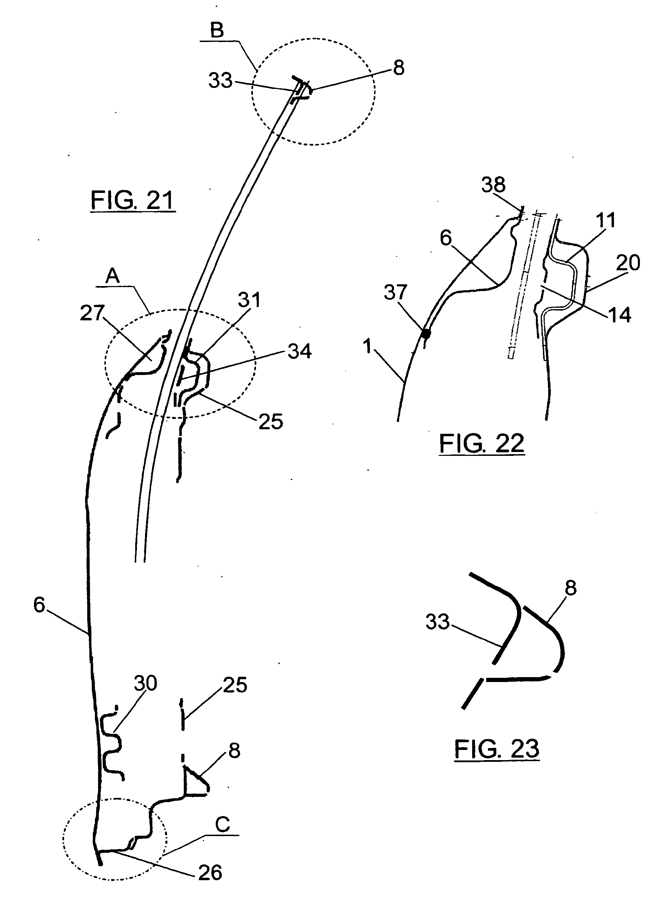

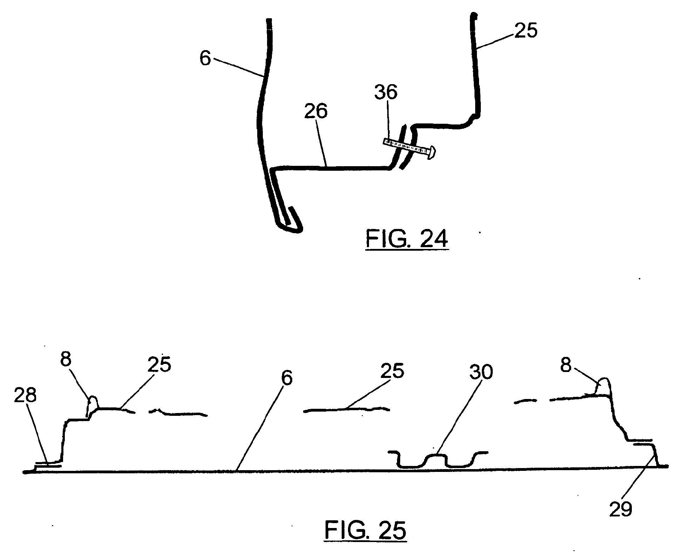

As shown in Figures 21, 22 and 23, the lower perimetral reinforcement 26 of the lower door frame is arranged between the outer panel 6 and the framing 25, joined to said panel by adhesion, whereas it is joined to the framing 25 by means of a screw 36, as shown in Figure 24. For its part, the upper perimetral reinforcement 27 is fixed to the inner surface of the panel 6, in a position adjacent to the upper edge thereof, being joined at the lower part by means of adhesion 37 and at the upper part by means of welding 38, as shown in Figure 22.

Figures 21 and 22 show the inner belt reinforcement 31 internally fixed to the door framing 25, from the upper part thereof, as well as also the lower frame reinforcement profile 34, which is fixed to the inner belt reinforcement, which fixings are carried out by means of welding.

Figure 21 also shows the protection bar 30, arranged between the outer panel 6 and the framing 25, as well as the frame reinforcement 33 which is fixed by means of welding at its lower ends to the inner belt reinforcement 31. Finally, the door casing 8 is welded in its entire contour to the frame reinforcement 33 and to the door framing 25.

Figure 25 also shows the protection bar 30, running in an oblique position, as well as the front perimetral reinforcement 28 and rear perimetral reinforcement 29 of the door frame which are arranged between the outer panel 6 and the framing 25, joined by adhesion to the panel and framing.

As can be seen, the number of parts of the door has increased with respect to conventional doors, but the investments necessary for their manufacture, especially in different successive doors, will be much smaller, since it would allow using several common components to obtain great variety of shapes and sizes.

Thus, for example, to obtain doors of a different length, it would not be necessary to modify the front perimetral frame reinforcement 28 and rear perimetral frame reinforcement 29, or the strut channel 32, which would be common for the different doors. In the case of doors changing in the direction of the Y axis, i.e., with different thicknesses, it would only be necessary to vary the front reinforcement 28 and rear reinforcement 29, together with the outer panel, whereas in the case of doors changing in height, i.e., in the Z axis, it would only be necessary to change the perimetral casing 8 and the frame reinforcement 33.

## Claims

1. A door for automotive vehicles, comprising a lower door framework (7), on which an outer door panel (6) is externally fixed, and a door casing (8) surrounding the lower door framework (7) and joined thereto; which door casing (8) has a ribbed profile which is supported and is joined by welding on the contour of the lower door framework (7), whereas on its convex side it defines, along the entire length thereof, the support means for supporting the door on the gasket (19) of the vehicle frame (20) for said door, wherein the lower door framework (7) further includes an inner belt reinforcement (31), a protection bar (30) and a strut channel (32), **characterized in that** the door casing (8) also surrounds an upper window frame framework (5), which is fixed to the lower door framework (7), and the ribbed profile, on its concave side, embraces and is joined by welding to the free sides of the upper window frame framework (5); and **in that** the lower door framework (7) is made up of a door framing (25) defining the contour of said framework, and of four perimetral reinforcements, a lower reinforcement (26), a front reinforcement (28) and a rear reinforcement (29), which are arranged and fixed between the outer door panel (6) and the framing (25) in a position adjacent to the corresponding edges, and of an upper reinforcement (27) which is fixed to the outer door panel (6), in a position adjacent to its upper edge, the inner belt reinforcement (31) being internally fixed to the door framing (25), in a position adjacent to its upper edge; and **in that** the upper window frame framework (5) is made up of a frame reinforcement (33), defined by a C-shaped contour coinciding with the upper and lateral sides (34) of said framework, and by a lower frame reinforcement profile (34) which is fixed to the inner belt reinforcement (31) of the framing; the frame reinforcement (33) being joined to the lower reinforcement profile (34) through the door casing (8), which casing is internally fixed to the outer surface of the door framing 25.

2. The door according to claim1, **characterized in that** the ribbed profile of the door casing (8) and the upper window frame framework (5) have overlapping longitudinal edges, on which there is assembled a rubber profile (17) serving as a gasket for the window glass (18).

3. The door according to claim 1, **characterized in that** the upper perimetral reinforcement (27) and lower perimetral reinforcement (26) of the lower door framework (7) are made up of sheet profiles, whereas the front perimetral reinforcement (28) and rear perimetral reinforcement (29) of the lower door framework are made up of press formed plates.

4. The door according to claim 1, **characterized in that** the perimetral casing (8) and the frame reinforcement (33) are made up of extruded profiles.

5. The door according to claim 1, **characterized in that** the perimetral casing (8) is joined by welding to the frame reinforcement (33), to the ends of the lower reinforcement profile (34), and to the door framing (25).

## Patentansprüche

1. Tür für Kraftfahrzeuge, umfassend eine untere Türstruktur (7), an welcher ein äußeres Türblech (6) von außen befestigt ist, und ein Türgehäuse (8), welches die untere Türstruktur (7) umgibt und mit dieser verbunden ist; wobei das Türgehäuse (8) ein geripptes Profil aufweist, das mittels Schweißen an der Kontur der unteren Türstruktur (7) gehalten und mit dieser verbunden ist, während es auf seiner konvexen Seite, entlang der gesamten Länge derselben, die Haltemittel für den Halt der Tür an der Dichtung (19) des Fahrzeugrahmens (20) für die genannte Tür definiert, wobei die untere Türstruktur (7) zusätzlich eine innere Bandverstärkung (31), eine Schutzstange (30) und ein Stützkanal (32) aufweist, **dadurch gekennzeichnet, dass** das Türgehäuse (8) ebenso eine obere Fensterrahmenstruktur (5) umgibt, welche an der unteren Türstruktur (7) befestigt ist, und das gerippte Profil, auf seiner konkaven Seite, die freien Seiten der oberen Fensterrahmenstruktur (5) umarmt und mittels Schweißen mit diesen verbunden ist; und dass die untere Türstruktur (7) aus einer Türrahmung (25) besteht, welche die Kontur der genannten Struktur definiert, und aus vier Umfangsverstärkungen, einer unteren Verstärkung (26), einer vorderen Verstärkung (28) und einer hinteren Verstärkung (29), welche zwischen dem äußeren Türblech (6) und der Rahmung (25) in einer zu den entsprechenden Rändern benachbarten Position angeordnet und befestigt sind, und aus einer oberen Verstärkung (27), welche an dem äußeren Türblech (6) in einer zu seinem oberen Rand benachbarten Position befestigt ist, besteht, wobei die innere Bandverstärkung (31) von innen an der Türrahmung (25) in einer zu seinem oberen Rand benachbarten Position befestigt ist; und dass die obere Fensterrahmenstruktur (5) aus einer Rahmenverstärkung (33) besteht, welche durch eine C-förmige Kontur, welche mit der oberen und der seitlichen Seite (34) der genannten Struktur übereinstimmt, und durch ein unteres Rahmenverstärkungsprofil (34), welches an der inneren Randverstärkung (31) der Rahmung befestigt ist, definiert ist; wobei die Rahmenverstärkung (33) mit dem unteren Verstärkungsprofil (34) durch das Türgehäuse (8) verbunden ist und das Gehäuse von innen an der äußeren Oberfläche der Türrahmung 25 befestigt ist.

2. Tür nach Anspruch 1, **dadurch gekennzeichnet, dass** das gerippte Profil des Türgehäuses (8) und die obere Fensterrahmenstruktur (5) longitudinale, sich überlappende Ränder aufweisen, auf welchen ein Gummiprofil (17) montiert ist, welches als Dichtung für die Fensterscheibe (18) dient.

3. Tür nach Anspruch 1, **dadurch gekennzeichnet, dass** die obere Umfangsverstärkung (27) und die untere Umfangsverstärkung (26) der unteren Türstruktur (7) aus Blechprofilen bestehen, während die vordere Umfangsverstärkung (28) und die hintere Umfangsverstärkung (29) der unteren Türstruktur aus gepressten Platten bestehen.

4. Tür nach Anspruch 1, **dadurch gekennzeichnet, dass** das Umfangsgehäuse (8) und die Rahmenverstärkung (33) aus extrudierten Profilen bestehen.

5. Tür nach Anspruch 1, **dadurch gekennzeichnet, dass** das Umfangsgehäuse (8) mittels Schweißen mit der Rahmenverstärkung (33), mit den Enden des unteren Verstärkungsprofil (34) und mit der Türrahmung (25) verbunden ist.

## Revendications

1. Portière pour véhicules automobiles, comprenant un encadrement de portière inférieur (7), sur lequel un panneau de portière extérieure (6) est fixé extérieurement, et une armature de portière (8) entourant l'encadrement de portière inférieur (7) et reliée à celui-ci ; armature de portière (8) qui a un profilé nervuré qui est supporté et uni par soudure sur le contour de l'encadrement de portière inférieur (7), tandis que sur son côté convexe il définit, le long de toute sa longueur, le moyen de support pour supporter la portière sur le joint d'étanchéité (19) du châssis de véhicule (20) pour ladite portière, où l'encadrement de portière inférieur (7) comporte en outre un renfort de ceinture intérieur (31), une barre de protection (30) et un canal de jambe de force à fente (32), **caractérisée en ce que** l'armature de portière (8) entoure également un encadrement de cadre de fenêtre supérieur (5), qui est fixé à l'encadrement de portière inférieur (7), et le profilé nervuré, sur son côté concave, comprend et est unie par soudure aux côtés libres de l'encadrement de cadre de fenêtre supérieur (5) ; et **en ce que** l'encadrement de portière inférieur (7) est constitué d'une huisserie (25) définissant le contour dudit encadrement, et de quatre renforts périphériques (29), un renfort inférieur (26), un renfort avant (28) et un renfort arrière (29), qui sont disposés et fixés entre le panneau de portière extérieur (6) et l'huisserie (25) dans une position adjacente aux bords correspondants, et d'un renfort supérieur (27) qui est fixé au panneau de portière extérieur (6), dans une position adjacente à son bord supérieur, le renfort de ceinture intérieur (31) étant fixé intérieurement à l'huisserie (25), dans une position adjacente à son bord supérieure ; et **en ce que** le cadre de fenêtre supérieur (5) est constitué d'un renfort de cadre (33), défini par un contour sous forme de C coïncidant avec les côtés supérieur et latéraux (34) dudit encadrement, et d'un profilé de renfort de cadre inférieur (34) qui est fixé au renfort de ceinture intérieur (31) de l'huisserie ; le renfort de cadre (33) étant relié au profilé de renfort inférieur (34) à travers l'armature de portière (8), armature qui est fixée intérieurement à la surface extérieure de l'huisserie (25).

2. Portière selon la revendication 1, **caractérisée en ce que** le profilé nervuré de l'armature de portière (8) et l'encadrement de cadre de fenêtre (5) ont des bords longitudinaux en chevauchement, sur lesquels est assemblé un profilé en caoutchouc (17) en guise de joint d'étanchéité pour la vitre (18).

3. Portière selon la revendication 1, **caractérisée en ce que** le renfort périphérique supérieur (27) et le renfort périphérique inférieur (26) de l'encadrement de portière inférieur (7) sont constitués de profilés feuilletés, tandis que le renfort périphérique avant (28) et le renfort périphérique arrière (29) de l'encadrement de portière inférieur sont constitués de plaques formées à la presse.

4. Portière selon la revendication 1, **caractérisée en ce que** l'armature périphérique (8) et le renfort de cadre (33) sont constitués de profilés extrudés.

5. Portière selon la revendication 1, **caractérisée en ce que** l'armature périphérique (8) est reliée par soudure au renfort de cadre (33), aux extrémités du profilé de renfort inférieur (34), et à l'huisserie (25).
